(19) Europäisches Patentamt
European Patent Office
Office européen des brevets

(11) **EP 3 328 010 B1**

(12) **EUROPEAN PATENT SPECIFICATION**

(45) Date of publication and mention
of the grant of the patent:
**12.12.2018 Bulletin 2018/50**

(51) Int Cl.:
***H04L 12/841*** *(2013.01)*     *H04J 3/06* *(2006.01)*

(21) Application number: **17203406.8**

(22) Date of filing: **23.11.2017**

(54) **ADAPTIVE JITTER BUFFER**

ADAPTIVER JITTERPUFFER

MÉMOIRE TAMPON DE GIGUE ADAPTATIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2016  FR 1661443**

(43) Date of publication of application:
**30.05.2018  Bulletin 2018/22**

(73) Proprietor: **Belledonne Communications**
**38100 Grenoble (FR)**

(72) Inventors:
• **MORLAT, Simon**
  **38100 GRENOBLE (FR)**

• **PELLOUX-PRAYER, Gautier**
  **26260 CLERIEUX (FR)**

(74) Representative: **Cabinet Beaumont**
**4, Place Robert Schuman**
**B.P. 1529**
**38025 Grenoble Cedex 1 (FR)**

(56) References cited:
**WO-A1-2012/154155       WO-A1-2012/154156**
**US-A1- 2012 008 641     US-A1- 2012 099 689**
**US-A1- 2015 172 197     US-B1- 6 259 677**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>FIELD</u>

The present disclosure relates to the field of packet communications, and in particular to an adaptive jitter buffer of a receiver in a packet communications system.

<u>BACKGROUND</u>

Voice over IP (Internet Protocol) corresponds to technologies that permit audio streams to be transmitted over IP networks, such as the internet. Similar technologies can be used to transmit video streams. The audio and/or video streams are transmitted as packets using a transport layer protocol such as RTP (real-time transport protocol, as defined by the standard IETF RFC3550), and may pass through various transmission mediums, such as wired or wireless connections, and through network hardware such as routers.

The receiver for receiving transmitted audio and/or video packets comprises a jitter buffer for storing the packets before they are decoded. The purpose of the jitter buffer is to compensate for variations in the transmission delay between the transmitter and the decoder, which may result from network congestion or other factors. However, a relatively high jitter buffer delay is undesirable in certain situations, such as when there are two-way communications established between the transmitter and the receiver, as will be the case for a voice or video call. It has therefore been proposed to provide adaptive jitter buffers that aim to bring the jitter buffer delay down to a minimum level based on the conditions present in the network.

Existing simple approaches for adapting the jitter buffer delay by analysing the real time fullness of the jitter buffer are not very accurate, or reliable, and tend to generate undesirable oscillations of the jitter buffer delay. There is thus a need in the art for an improved adaptive jitter buffer and method of determining a jitter buffer delay.

United States patent application published as US 2012/008641 relates to a receiving node for receiving data packets in a packet communication system.

<u>SUMMARY</u>

It is an aim of embodiments of the present description to at least partially address one or more needs in the prior art.

The approach described herein advantageously takes into account timestamp information present in the media packets. In particular, the linear relationship between the timestamp and the receiver's local time provides a useful source of information that is exploited in the embodiments of the present disclosure in order to dynamically adapt the jitter buffer delay.

According to one aspect, there is provided a receiver comprising: a jitter buffer configured to store packets of a media stream to provide a jitter compensated flow of packets, wherein each packet includes a timestamp; and a processing device configured: to determine a timestamp S(k) of each packet k to be fetched from the jitter buffer based on the receiver time and on a jitter buffer delay J of the jitter buffer; and to set the value of J based on an error between the predicted reception time of each packet and a measured reception time of each packet, the predicted reception time being generated based on the timestamp of each packet k and on parameters c and d, where $c$ is an estimated clock rate ratio between a sender's clock and a local clock of the receiver, the sender's clock being used to generate the timestamp of each packet, and $d$ is a clock offset between the sender's clock and the local clock, wherein the processing device is configured to determine the timestamp S(k) based on the following formula: $S(k) = (1/c)(R_k\text{-}d\text{-}J)$, where $R_k$ is the receiver time, and J is the jitter buffer delay of the jitter buffer.

According to one embodiment, the processing device is configured to estimate the clock rate ratio and the clock offset based on the following model of the reception time $R_k$ of a packet k: $R_k = cE_k + d$, where $E_k$ is the timestamp of the packet k.

According to one embodiment, the processing device is configured to predict the reception time using a recursive least squares algorithm based on a Kalman filter.

According to one embodiment, the processing device is configured to generate the value of J by comparing an error, between the predicted reception time of each packet and a measured reception time of each packet, with a threshold.

According to one embodiment, the threshold is equal to between 50% and 90% of a previous value of J.

According to one embodiment, if the threshold is exceeded, the value of J is set to the maximum of the previous value of J and the error $M_k$.

According to one embodiment, if the threshold is not exceeded, and the error has not exceeded the threshold for a minimum duration, J is equal to the previous value of J minus a constant.

According to a further aspect, there is provided a method of reception of a media stream comprising: storing packets of the media stream in a jitter buffer to provide a jitter compensated flow of packets, wherein each packet includes a timestamp; determining, by a processing device, a timestamp S(k) of each packet k to be fetched from the jitter buffer based on the receiver time and on a jitter buffer delay J of the jitter buffer; and setting, by the processing device, the value of J by calculating an error between the predicted reception time of each packet and a measured reception time of each packet, the predicted reception time being generated based on the timestamp of each packet k and on parameters $c$ and $d$, where $c$ is an estimated clock rate ratio between a sender's clock and a local clock of the receiver, the sender's clock being used to generate the timestamp of each packet, and $d$ is a clock offset between the sender's clock and the local clock, wherein determining the timestamp S(k) of a packet k is based on the following formula: $S(k)=(1/c)(R_k-d-J)$, where $R_k$ is the receiver time, and J is a jitter buffer delay of the jitter buffer.

According to one embodiment, the clock rate ratio and the clock offset are estimated based on the following model of the reception time $R_k$ of a packet k: $R_k=cE_k+d$, where $E_k$ is the timestamp of the packet k.

According to a further aspect, there is provided a non-transitory storage medium storing a computer program configured to implement the above method when executed by a processing device.

## BRIEF DESCRIPTION OF THE DRAWINGS

The foregoing and other features and advantages will become apparent from the following detailed description of embodiments, given by way of illustration and not limitation with reference to the accompanying drawings, in which:

Figure 1 schematically illustrates a packet transmission system according to an example embodiment;
Figure 2 schematically illustrates a receiver of Figure 1 in more detail according to an example embodiment of the present disclosure;
Figure 3 is a flow diagram illustrating operations in a method of controlling a jitter buffer size according to an example embodiment;
Figure 4 is a flow diagram illustrating operations in a method of estimating clock parameters according to an example embodiment of the present disclosure; and
Figure 5 is a flow diagram illustrating operations in a method of setting the size of a jitter buffer according to an example embodiment of the present disclosure.

## DETAILED DESCRIPTION

Throughout the following description, example embodiments are described based on packet transmission using RTP. However, it will be apparent to those skilled in the art that the techniques described herein could be applied to other packet transmission protocols in which the packets contain timestamp information. The term "around" is used herein to designate a range of +/- 10 percent of the value in question.

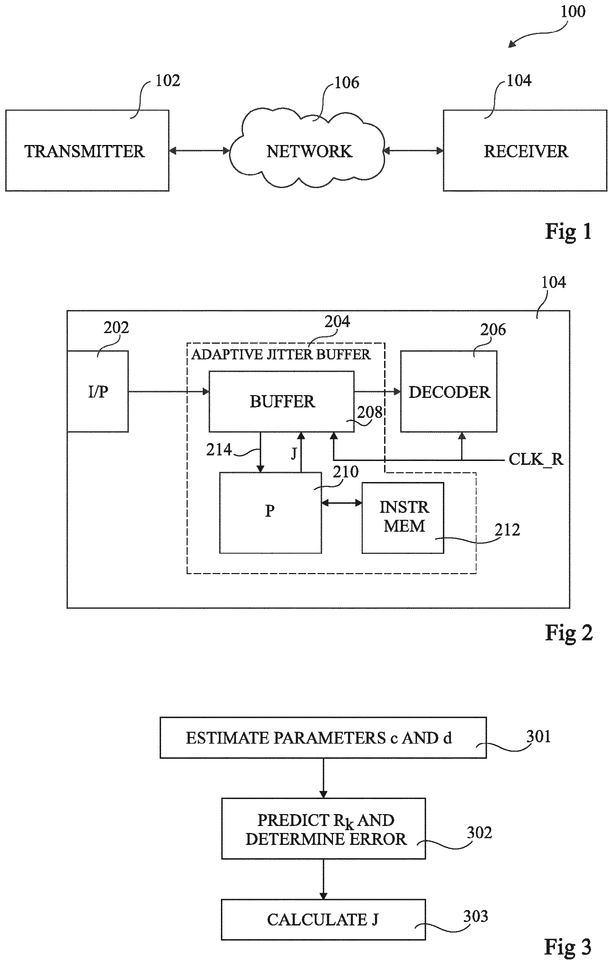

Figure 1 schematically illustrates a packet transmission system 100 according to an example embodiment. The system 100 comprises a transmitter (TRANSMITTER) 102 and a receiver (RECEIVER) 104 coupled via a network (NETWORK) 106 represented by a cloud. The transmitter 102 is capable of transmitting a media stream to the receiver 104 via the network 106. Throughout the following description, the term "media stream" will be used to designate a stream comprising packets to be processed in real time by the receiver, such as packets of audio data, video data and/or any other kind of real time data. Of course, the transmitter 102 may also be capable of receiving a media stream from the receiver 104, but for ease of description, communications in only one direction will be described herein.

The transmitter 102 and receiver 104 are each for example communications devices, such as mobile telephones, smart phones, tablet or laptop computers, or the like, adapted to communicate with the network 106 via one or more wired or wireless links. Alternatively, each of the transmitter 102 and receiver 104 could be a laptop computer or personal computer (PC) coupled to the network 106 via a wired network such as a LAN (local area network) or via a wireless network such as a wireless LAN.

The network 106 is for example a packet-switched network, for example comprising the internet, and includes routers for directing packets through the network, as known by those skilled in the art.

In some embodiments, the transmitter 102 is adapted to transmit the media stream to the receiver 104 in the form of packets using a transport layer protocol such as RTP (real-time transport protocol). The effective transmission bitrate, in other words the rate at which data is successfully transmitted over the network, is a function of the transmission bitrate, the latency between the end points, and the packet loss rate.

Figure 2 schematically illustrates part of the receiver 104 of Figure 1 in more detail according to an example embodiment. The receiver 104 for example comprises an input interface (I/P) 202 for receiving packets from the network 106, and for providing suitable demodulation and conversion, depending on the particular transmission interface via which the packets are received.

An output of the input interface 202 is coupled to an adaptive jitter buffer (ADAPTIVE JITTER BUFFER) 204, which temporarily stores media packets received by the input interface 202. The packets are then provided to a decoder (DECODER) 206, which decodes the packets based on the particular audio and/or video compression standard applied to the media stream, and generates decoded audio and/or video, which is for example played back immediately. The decoder for example decodes packets based on the rendering device's clock CLK_R, referred to herein as the receiver clock. In the case of a video encoder, this may correspond to a system clock, while in the case of an audio stream, this is typically the clock of the digital to analog converter used to regenerate the audio stream.

The adaptive jitter buffer 204 for example comprises a jitter buffer (BUFFER) 208, implemented for example by an SRAM (static random access memory), DRAM (dynamic random access memory) or FLASH memory. Packets are temporarily stored in a jitter queue in the jitter buffer before being fetched by the decoder 206. The adaptive jitter buffer 204 also for example comprises a processing device (P) 210, which for example comprises one or more processors under control of instructions stored in an instruction memory (INSTR MEM) 212. The processing device 210 is for example the main processor or host processor of the receiver 104.

The processing device 210 is for example configured to receive, from the buffer 208, timing information concerning the packets received by the buffer. This timing information comprises for example a measured reception time $R_k$ of each packet k received by the receiver. For example, the reception time is taken from the rendering device's clock CLK_R each time a packet is received. The processing device is further configured to calculate a parameter J supplied to the buffer 208 for controlling the jitter buffer delay. For example, the parameter J determines the size of the jitter buffer available for the storage of packets. In particular, the parameter J for example defines the time that a packet will be held in the jitter buffer before being passed to the decoder, assuming the transit time of packets from the transmitter to the receiver is always constant. The purpose of the jitter buffer delay is to accommodate for temporary delays in the transmission path. As long as this delay is less than J, the packet can still be considered as "on time" from the decoder's point of view. Indeed, its actual rendering time will be consistent with the rendering time of the previous packets to be decoded, i.e. there will not be a time gap between the decoding of successive packets. The parameter J is for example expressed in fractions of a second.

Figure 3 is a flow diagram illustrating operations in a method of calculating the jitter buffer delay J of the adaptive jitter buffer 204 according to an example embodiment. This method is for example implemented by the processing device 210 of Figure 2.

In an operation 301, the processing device 210 is for example configured to estimate parameters c and d relating to the received packet stream, where c is a clock rate ratio between the clock rates Ct and Cr of the transmitter and receiver respectively, and d is a clock offset difference between the clocks of the transmitter and receiver. For example, c = Cr/Ct. As described in more detail below, the estimation of these parameters is for example based on an RLS (recursive least squares) algorithm based on the Kalman algorithm.

In an operation 302, the reception time $R_k$ of a packet k is predicted based on the parameters c and d, and on the timestamp $E_k$ of the packet k. An error $M_k$ in this prediction is determined based on the measured actual time of the reception of the packet k.

In particular, each data packet for example comprises a header including a corresponding timestamp $E_k$, which is for example an RTP (real-time transport protocol) timestamp. The RTP protocol is for example described in more detail in the publication by H. Schulzrinne et al. entitled "RTP: A Transport Protocol for Real-Time Applications", the internet society (2003), the contents of which is for example incorporated herein to the extent permitted by the law. The timestamp is for example a 32-bit value, and for example indicates the value of the RTP clock at the sampling instant of a first sample in the RTP data packet.

As a typical example, the RTP clock rate, and thus the transmission clock rate, for a video stream defined in 1/90 000 of a second, and for an audio stream is equal to the audio sampling rate, which is for example equal to 8 kHz, although many other values would be possible. As an example, a first packet of an audio stream could have a timestamp equal to d, and may contain 160 samples. A subsequent packet of the audio stream would then have a timestamp equal to d+160.

In an operation 303, the jitter buffer delay J to be applied is calculated based on the error determined in operation 302.

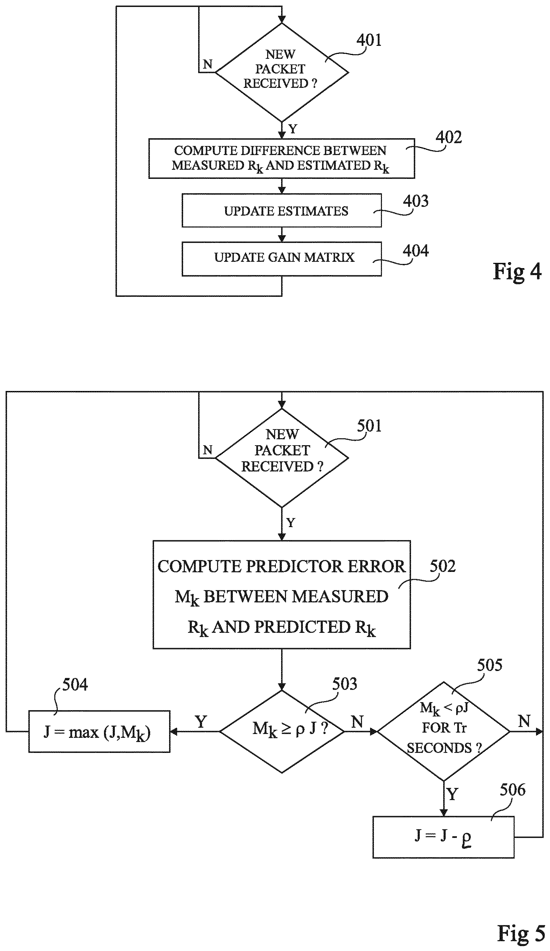

Figure 4 is a flow diagram representing the operation 301 of the method of Figure 3 in more detail according to an example embodiment.

In an operation 401, it is determined whether a new packet has been received. When a packet is received, operations 402 to 404 are performed to estimate the parameters c and d. This method is for example an iterative method, each iteration corresponding to a new packet. The method converges to relatively precise estimates of c and d after several iterations.

The estimation of the parameters c and d for example uses an RLS algorithm based on the Kalman algorithm, applied to a model y(k) that assumes an ideal transmission. The RLS algorithm is for example based on a model y(k) of the form:

$$y(k) = \varphi^T(k)\theta$$

where $\theta$ is an unknown parameters vector, and $\varphi^T(k)$ is a regressions vector. The RLS algorithm can be expressed as follows:

$$\forall k > 1, \theta(k) = \theta(k-1) + P(k)\varphi(k)\big(y(k) - \varphi^T(k)\theta(k-1)\big)$$

$$\forall k > 1, P(k) = \frac{1}{\lambda}\big(P(k-1) - \frac{P(k-1)\varphi(k)\varphi^T(k)P(k-1)}{\lambda + \varphi^T(k)P(k-1)\varphi(k)}\big)$$

where $\lambda$ is a forgetting factor of between 0 and 1, $P(k)$ is a gain matrix, and can be expressed as $P(k)\varphi(k)=K(k)$, where $K(k)$ is the Kalman matrix gain.

To estimate the parameters c and d, the following model is for example used, in which $y(k)$ is the local reception time $R_k$ at the receiver of a packet k:

$$y(k) = R_k = cE_k + d$$

where $E_k$ is the timestamp of packet k, and c and d are the clock rate ratio and offset as defined above.

In a case in which the transmission delay is constant, and the clocks are perfectly aligned, the packets will be emitted and received at a constant rate, and the following relation holds true:

$$\forall k, R_k - E_k = d$$

On the receiver side, the offset d is unknown, and while the theoretical value of the transmission clock rate Rt is known, in practice this value can be shifted slightly with respect to the theoretical value. Indeed, the receiver 104 is generally distant from the transmitter 102, and is unlikely to be precisely synchronized by external mechanisms such as the NTP (network time protocol) or by a GPS (global positioning system) device. In the case of audio streams, the time reference used for the transmission is the one employed by the sampling device, such as the analog to digital converter of the transmitter 102, whose actual sampling rate may differ slightly, as a result of hardware manufacturing constraints, from the sampling rate of the rendering device, such as the digital to analog converter of the receiver 104. This results in clock skew between the transmitter 102 and the receiver 104, which is generally under five percent, but which should generally be taken into account by the receiver 104 in order to ensure correct playback.

The parameters $\theta(k)$ and $\varphi(k)$ of the RLS algorithm are for example defined as follows:

$$\forall k, \theta(k) = \begin{bmatrix} c_k \\ d_k \end{bmatrix} \text{ and } \varphi(k) = \begin{bmatrix} E_k \\ 1 \end{bmatrix}$$

In operation 402, a difference is calculated between the measured reception time $R_k$ of the received packet and an estimation $R_k'$ of the reception time based on previous estimates of the parameters c and d, determined for example based on the formula:

$$R_k' = c_{k-1}E_k + d_{k-1}$$

In an operation 403, the estimate of the parameters c and d are updated based on the RLS algorithm as follows:

$$c_k = c_{k-1} + (P_{11}E_k + P_{12})(R_k - (c_{k-1}E_k + d_{k-1}))$$

$$d_k = d_{k-1} + (P_{21}E_k + P_{22})\big(R_k - (c_{k-1}E_K + d_{k-1})\big)$$

where P is the gain matrix, which is for example a two-by-two matrix having a top row of values $P_{11}$ and $P_{12}$, and a bottom row of values $P_{21}$ and $P_{22}$.

In an operation 404, the gain matrix is then for example updated as follows:

$$P(k) = \frac{1}{\lambda} \begin{bmatrix} P_{11} - \dfrac{(P_{11}E_k + P_{21})(P_{11}E_k + P_{12})}{\alpha_k} & P_{12} - \dfrac{(P_{12}E_k + P_{22})(P_{11}E_k + P_{12})}{\alpha_k} \\ P_{21} - \dfrac{(P_{11}E_k + P_{21})(P_{21}E_k + P_{22})}{\alpha_k} & P_{22} - \dfrac{(P_{12}E_k + P_{22})(P_{21}E_k + P_{22})}{\alpha_k} \end{bmatrix}$$

where $\alpha_k = \lambda + (P_{11}E_k + P_{21})E_k + (P_{12}E_k + P_{22})$, and $\lambda$ is a forgetting factor of between 0 and 1.

The method then for example returns to operation 401 ready for the reception of a subsequent packet.

The values of the parameters c and d, as well as of the gain matrix P, are for example initialized at the start of a given transmission of an audio and/or video stream. The value of c can be expected to be in the range [0.9-1.1] with a high level of confidence, as the transmission and reception clock rates should be calibrated relatively well with each other. The parameter d could however take any value, because the origin of the timestamps is chosen randomly by the emitter. It can therefore take several iterations in order for the value of d to settle to a relatively precise estimate. The parameters c, d and P are thus for example initialized as follows:

$$\theta(1) = \begin{bmatrix} 1 \\ R_1 - E_1 \end{bmatrix} \; and \; P(1) = \begin{bmatrix} 10^{-10} & 0 \\ 0 & 10^{-1} \end{bmatrix}$$

Given that the values of c and d should not vary during a given transmission, the forgetting factor $\lambda$ is for example set to a value of 1, such that all previous estimates of c and d are taken into account.

Figure 5 is a flow diagram illustrating the operations 302 and 303 of the method of Figure 3 in more detail according to an example embodiment. While in Figure 3 the operations 302 and 303 are presented as being performed after the operation 301, in some embodiments these operations may be performed in parallel with the operation 301.

The method of Figure 5 aims at determining the jitter buffer delay J that permits packets to be processed properly by the receiver. In particular, at each receiver instant, the receiver can compute the RTP timestamp S(k) of the packet to be fetched from the jitter queue using the formula:

$$\forall k > 0, S(k) = (1/c)(R_k - d - J)$$

where *c* and *d* are the clock rate ratio c and clock offset d between the clocks Ct and Cr of the transmitter and the receiver respectively, and J is the jitter buffer delay, and in particular is equal to the size of the jitter buffer, the role of which is to compensate for short term increases in the packet transmission delay. J is preferably calculated in order to provide a relatively high probability of there being, at any time, a packet in the jitter buffer whose timestamp is equal to or older than S(k). It should be noted that, because the packet timestamps are discrete and not necessarily at regular increments, the calculated RTP timestamp S(k) according to the above formula may not correspond to the timestamp of a received packet. As a result, the packet to be fetched from the jitter queue is for example the first packet that is older than S(k) when iterating through the packets stored by the jitter buffer from newest to oldest.

With reference to Figure 5, in an operation 501, it is determined whether a new packet has been received. When a packet is received, the next operation is 502.

In operation 502, a predictor error $M_k$ between a measured value of the reception time $R_k$ of the packet k and the predicted value $R_k"$ of the reception time of the packet k is determined, where the predicted value $R_k"$ is for example based on the estimations of the clock rate ratio *c* and the clock offset *d*, and on the timestamp $E_k$ of the packet k, according to the following equation:

$$R_k" = cE_k + d$$

For example, the predictor error $M_k$ is calculated as:

$$M_k = R_k - R_k"$$

In an operation 503, it is then determined whether the error $M_k$ is greater than or equal to a parameter $\rho J$, where $\rho$ is a fraction equal for example to between 50% and 90%, and for example equal to around 70% in one example, and J is the current jitter buffer size. J is for example initialized at a value of around 60 ms. If $M_k$ is greater than this threshold, the next operation is 504. Otherwise the next operation is 505.

In operation 504, the parameter J is for example set to the maximum between J and $M_k$. The method then returns to operation 501 ready for a new packet to be received.

In operation 505, it is for example determined whether the prediction error $M_k$ has been lower than $\rho J$ for a previous interval of Tr seconds. $T_r$ is for example a constant equal to between 300 ms and several seconds, and for example equal to around 1 s. If $M_k$ has been lower than $\rho J$ for Tr seconds, the next operation is an operation 506, in which the value of J is for example reduced by a constant $\varrho$, equal for example to between 10 and 50 ms, and for example around 20 ms. Thus the update of J can be resumed as follows:

$$J = \begin{cases} J - \varrho & if \ M_k < \rho J \ for \ Tr \ seconds \\ \max(J, M_k) & if \ M_k \geq \rho J \end{cases}$$

After operation 506, or after operation 505 if the condition is not met, the method for example returns to operation 501 ready for the reception of a new packet.

In some embodiments, the processing device is adapted to maintain the value of J within upper and lower limits Jmax, Jmin respectively, wherein Jmax is a jitter buffer maximum delay, and Jmin is a jitter buffer minimum delay. Therefore, operation 504 for example involves selecting the new value of J as min(max(J, $M_k$), Jmax), and operation 506 for example involves selecting the new value of J as max(J- $\varrho$ , Jmin).

Modified values of J are for example provided to the buffer 208. In the case that J increases, the jitter queue of the buffer 208 is increased in size accordingly. This means that, based on the equation for S(k) given above, packets queued in the jitter buffer will be provided to the decoder after an increased delay. Reductions in the size of the jitter buffer are relatively slow, and the buffer 208 is for example adapted to occasionally drop some frames in order to progressively reduce the size of the jitter queue as network conditions improve.

An advantage of the embodiments described herein is that, by controlling the size J of the jitter buffer based on an error between a predicted reception time of a packet and the actual reception time, the size of the jitter buffer can be controlled in a particularly quick and precise manner. Furthermore, the present inventors have found that the use of an RLS algorithm based on a Kalman algorithm to estimate the parameters c and d, which are in turn used to predict the reception time of a packet k, provides a fast convergence to relatively precise predictions.

Having thus described at least one illustrative embodiment, various alterations, modifications and improvements will readily occur to those skilled in the art. In particular, while an example of hardware and software implementing the receiver has been described with reference to Figure 2, it will be apparent to those skilled in the art that other implementations would be possible, including purely hardware implementations.

**Claims**

1.  A receiver comprising:

    a jitter buffer (208) configured to store packets of a media stream to provide a jitter compensated flow of packets, wherein each packet
    includes a timestamp; and
    a processing device (210) configured:

        - to determine a timestamp S(k) of each packet k to be fetched from the jitter buffer based on the receiver time, $R_k$, and on a jitter buffer delay J of the jitter buffer; and
        - to set the value of J based on an error, $M_k$, between predicted reception time, $R_k''$, of each packet and a measured reception time, $R_k$, of each packet, **characterized in that** the predicted reception **time**, $R_k$, is generated based on the timestamp, $E_k$, of each packet k and on parameters c and d, where c is an estimated clock rate ratio between a sender's clock and a local clock of the receiver, the sender's clock being used to generate the timestamp of each packet, and d is a clock offset between the sender's clock and the local clock, and **in that** the processing device is configured to determine the timestamp S(k) based on the following formula:

$$S(k) = (1/c)(R_k - d - J)$$

where $R_k$ is the receiver time and J is the jitter buffer delay of the jitter buffer (208).

2. The receiver of claim 1, wherein the processing device is configured to estimate the clock rate ratio and the clock offset based on the following model of the reception time $R_k$ of a packet k:

$$R_k = cE_k + d$$

where $E_k$ is the timestamp of the packet k.

3. The receiver of claim 2, wherein the processing device is configured to predict the reception time using a recursive least squares, RLS, algorithm based on a Kalman filter.

4. The receiver of any of claims 1 to 3, wherein the processing device is configured to generate the value of J by comparing an error, $M_k$, between the predicted reception time, $R_k$ , of each packet and a measured reception time, $R_k$, of each packet, with a threshold, $\rho J$.

5. The receiver of claim 4, wherein said threshold is equal to between 50% and 90% of a previous value of J.

6. The receiver of claim 4 or 5, wherein if said threshold is exceeded, the value of J is set to the maximum of the previous value of J and the error $M_k$.

7. The receiver of any of claims 4 to 6, wherein if said threshold is not exceeded, and the error has not exceeded the threshold for a minimum duration, $T_r$, J is equal to the previous value of J minus a constant.

8. A method of reception of a media stream comprising:

   storing packets of the media stream in a jitter buffer (208) to provide a jitter compensated flow of packets, wherein each packet includes a timestamp, $E_k$;
   determining, by a processing device (210), a timestamp S(k) of each packet k to be fetched from the jitter buffer based on the receiver time, $R_k$, and on a jitter buffer delay J of the jitter buffer; and
   setting, by the processing device, the value of J by calculating an error, $M_k$, between a predicted reception time, Rk", of each packet and a measured reception time, $R_k$, of each packet,

   **characterized in that** the predicted reception time, $R_k$", is generated based on the timestamp, $E_k$, of each packet k and on parameters c and d, where c is an estimated clock rate ratio between a sender's clock and a local clock of the receiver, the sender's clock being used to generate the timestamp of each packet, and d is a clock offset between the sender's clock and the local clock and **in that** determining the timestamp S(k) of a packet k is based on the following formula:

$$S(k) = (1/c)(R_k - d - J)$$

where $R_k$ is the receiver time, and J is a jitter buffer delay of the jitter buffer (208).

9. The method of claim 8, wherein the clock rate ratio and the clock offset are estimated based on the following model of the reception time $R_k$ of a packet k:

$$R_k = cE_k + d$$

where $E_k$ is the timestamp of the packet k.

**10.** A non-transitory storage medium storing a computer program configured to implement the method of any of claim 8 or 9 when executed by a processing device.

**Patentansprüche**

**1.** Ein Empfänger, der Folgendes aufweist:

einen Jitterbuffer (208), der konfiguriert ist zum Speichern von Paketen eines Medienstroms, um einen jitterkompensierten Paketfluss vorzusehen, wobei jedes Paket einen Zeitstempel $E_k$ aufweist; und eine Verarbeitungsvorrichtung (210), die konfiguriert ist zum:

Bestimmen eines Zeitstempels S(k) von jedem aus dem Jitterbuffer zu holenden Paket k basierend auf der Empfangszeit $R_k$ und einem Jitterbuffer-Delay des Jitterbuffers; und
Festlegen des Wertes von J basierend auf einem Fehler $M_k$ zwischen der vorhergesagten Empfangszeit $R_k''$ jedes Pakets und einer gemessenen Empfangszeit $R_k$ jedes Pakets, **dadurch gekennzeichnet, dass** die vorhergesagte Empfangszeit $R_k''$ basierend auf dem Zeitstempel $E_k$ jedes Pakets k und den Parametern c und d erzeugt wird, wobei c ein geschätztes Takt-Ratenverhältnis zwischen dem Takt eines Senders und einem lokalen Takt des Empfängers ist, wobei der Takt des Senders verwendet wird zum Erzeugen des Zeitstempels jedes Pakets, und wobei d ein Takt-Offset zwischen dem Takt des Senders und dem lokalen Takt ist, und dadurch dass die Verarbeitungsvorrichtung konfiguriert ist zum Bestimmen des Zeitstempels S(k) basierend auf der folgenden Formel:

$$S(k) = (1/c)(R_k - d - J)$$

wobei $R_k$ die Empfangszeit und J das Jitterbuffer-Delay des Jitterbuffers (208) ist.

**2.** Empfänger nach Anspruch 1, wobei die Verarbeitungsvorrichtung konfiguriert ist zum Schätzen des Takt-Ratenverhältnisses und des Takt-Offsets basierend auf dem folgenden Modell der Empfangszeit $R_k$ eines Pakets k:

$$R_k = cE_k + d$$

wobei $E_k$ der Zeitstempel des Pakets k ist.

**3.** Empfänger nach Anspruch 2, wobei die Verarbeitungsvorrichtung konfiguriert ist zum Vorhersagen der Empfangszeit unter Verwendung eines rekursiven Algorithmus der kleinsten Quadrate RLS basierend auf einem Kalman-Filter.

**4.** Empfänger nach einem der Ansprüche 1 bis 3, wobei die Verarbeitungsvorrichtung konfiguriert ist zum Erzeugen des Wertes von J durch Vergleichen eines Fehlers $M_k$ zwischen der vorhergesagten Empfangszeit $R_k''$ jedes Pakets und einer gemessenen Empfangszeit $R_k$ jedes Pakets mit einem Schwellenwert pJ.

**5.** Empfänger nach Anspruch 4, wobei der Schwellenwert zwischen 50% und 90% gleich zu einem vorherigen Wert von J ist.

**6.** Empfänger nach Anspruch 4 oder 5, wobei, wenn der Schwellenwert überschritten wird, der Wert von J auf das Maximum des vorherigen Wertes von J und den Fehler $M_k$ eingestellt wird.

**7.** Empfänger nach einem der Ansprüche 4 bis 6, wobei, wenn der Schwellenwert nicht überschritten wird und der Fehler den Schwellenwert für eine minimale Dauer $T_r$ nicht überschritten hat, J gleich dem vorherigen Wert von J minus einer Konstante $\varrho$ ist.

**8.** Verfahren zum Empfangen eines Medienstroms, das Folgendes aufweist:

Speichern von Paketen des Medienstroms in einem Jitterbuffer (208) zum Vorsehen eines jitterkompensierten Flusses von Paketen, wobei jedes Paket einen Zeitstempel $E_k$ aufweist;

Bestimmen, durch eine Verarbeitungsvorrichtung (210), einen Zeitstempel S(k) jedes von dem Jitterbuffer zu holenden Pakets k basierend auf der Empfangszeit $R_k$ und auf einem Jitterbuffer-Delay J des Jitterbuffers; und Einstellen, durch die Verarbeitungsvorrichtung, des Wertes von J durch Berechnen eines Fehlers $M_k$ zwischen einer vorhergesagten Empfangszeit $R_k''$ jedes Pakets und einer gemessenen Empfangszeit Rk jedes Paketes, **dadurch gekennzeichnet, dass** die vorhergesagten Empfangszeit $R_k''$ basierend auf dem Zeitstempel Ek jedes Pakets k und auf den Paramtern c und d erzeugt wird, wobei c ein geschätztes Takt-Ratenverhältnis zwischen einem Takt des Senders und einem lokalen Takt des Empfängers ist, wobei der Takt des Senders verwendet wird zum Erzeugen des Zeitstempels jedes Pakets und d ein Takt-Offset zwischen dem Takt des Senders und dem lokalen Takt ist und **dadurch gekennzeichnet, dass** das Bestimmen des Zeitstempels S(k) eines Pakets k auf folgender Formel basiert:

$$S(k) = (1/c)(R_k - d - J)$$

wobei $R_k$ die Empfangszeit ist und J ein Jitterbuffer-Delay des Jitterbuffers (208) ist.

9. Verfahren nach Anspruch 8, wobei das Takt-Ratenverhältnis und der Takt-Offset basierend auf dem folgenden Modell der Empfangszeit $R_k$ eines Pakets k geschätzt werden:

$$R_k = cE_k + d$$

wobei $E_k$ der Zeitstempel des Pakets k ist.

10. Ein nicht-flüchtiges Speichermedium, das ein Computerprogramm speichert, welches konfiguriert ist zum Implementieren eines Verfahrens nach einem der Ansprüche 8 oder 9, wenn es von einer Verarbeitungsvorrichtung ausgeführt wird.

**Revendications**

1. Récepteur comprenant :

un tampon de gigue (208) agencé pour stocker des paquets d'un flux d'informations pour fournir un flux de paquets compensé en gigue, dans lequel chaque paquet inclut un repère temporel, $E_k$ ; et
un dispositif de traitement (210) agencé pour :

- déterminer un repère temporel S(k) de chaque paquet k à rechercher dans le tampon de gigue sur la base de l'instant de réception, $R_k$, et du retard J du tampon de gigue ; et
- fixer la valeur de J sur la base d'une erreur, $M_k$, entre un instant de réception prédit, $R_k''$, de chaque paquet et un instant de réception mesuré, $R_k$, de chaque paquet, **caractérisé en ce que** l'instant de réception prédit, $R_k''$, est généré sur la base du repère temporel, $E_k$, de chaque paquet k et des paramètres c et d, où c est le rapport des cadences d'horloge estimé entre l'horloge d'émission et l'horloge locale du récepteur, l'horloge d'émission étant utilisée pour générer le repère temporel de chaque paquet, et d est le décalage d'horloges entre l'horloge d'émission et l'horloge locale, et **en ce que** le dispositif de traitement est agencé pour déterminer le repère temporel S(k) sur la base de la formule suivante :

$$S(k) = (1/c)(R_k - d - J)$$

où $R_k$ est le temps récepteur, et J est le retard du tampon de gigue (208).

2. Récepteur selon la revendication 1, dans lequel le dispositif de traitement est agencé pour estimer le rapport des cadences d'horloge et le décalage d'horloge sur la base du modèle suivant de l'instant de réception $R_k$ du paquet k :

$$R_k = cE_k + d$$

où $E_k$ est le repère temporel du paquet k.

3.  Récepteur selon la revendication 2, dans lequel le dispositif de traitement est agencé pour prédire l'instant de réception en utilisant un algorithme des moindres carrés récursifs, RLS, basé sur un filtre de Kalman.

4.  Récepteur selon l'une quelconque des revendications 1 à 3, dans lequel le dispositif de traitement est agencé pour générer la valeur de J en comparant avec un seuil, $\rho J$, une erreur, $M_k$, entre l'instant de réception prédit, $R_k''$, de chaque paquet et l'instant de réception mesuré, $R_k$, de chaque paquet.

5.  Récepteur selon la revendication 4, dans lequel ledit seuil est compris entre 50 et 90 % d'une valeur précédente de J.

6.  Récepteur selon la revendication 4 ou 5, dans lequel si le seuil est dépassé, la valeur de J est fixée au maximum de la valeur de J précédente et de l'erreur $M_k$.

7.  Récepteur selon l'une quelconque des revendications 4 à 6, dans lequel si ledit seuil n'est pas dépassé, et que l'erreur n'a pas dépassé le seuil pendant une durée minimum, $T_r$, J est égal à la valeur précédente de J moins une constante, $\varrho$.

8.  Procédé de réception d'un flux d'information comprenant :

    stocker les paquets du flux d'information dans un tampon de gigue (208) pour fournir un flux de paquets compensé en gigue, dans lequel chaque paquet inclut un repère temporel, $E_k$ ;
    déterminer, par un dispositif de traitement (210), un repère temporel S(k) de chaque paquet k à rechercher dans le tampon de gigue sur la base d'un temps de récepteur, $R_k$, et d'un retard de tampon de gigue J d'un tampon de gigue ; et
    fixer, par le dispositif de traitement, la valeur de J en calculant une erreur, $M_k$, entre un instant de réception prédit, $R_k''$, de chaque paquet et un instant de réception mesuré, $R_k$, de chaque paquet, **caractérisé en ce que** l'instant de réception prédit, $R_k''$, est généré sur la base du repère temporel, $E_k$, de chaque paquet k et sur les estimations des paramètres c et d, où c est le rapport des cadences d'horloge estimé entre l'horloge d'émetteur et l'horloge locale du récepteur, l'horloge émetteur étant utilisée pour générer le repère temporel de chaque paquet, et d est le décalage d'horloge entre l'horloge de l'émetteur et l'horloge locale, et **en ce que** la détermination du repère temporel S(k) du paquet k est basée sur la formule suivante :

$$S(k) = (1/c)(R_k - d - J)$$

    où $R_k$ est le temps récepteur, et J est le retard du tampon de gigue (208).

9.  Procédé selon la revendication 8, dans lequel le rapport des cadences d'horloge et le décalage d'horloge sont estimés sur la base du modèle suivant de l'instant de réception $R_k$ d'un paquet k :

$$R_k = cE_k + d$$

    où $E_k$ est le repère temporel du paquet k.

10. Milieu de stockage non transitoire stockant un programme d'ordinateur agencé pour mettre en oeuvre le procédé de l'une quelconque des revendications 8 ou 9 quand il est exécuté par un dispositif de traitement.

Fig 1

Fig 2

Fig 3

Fig 4

Fig 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2012008641 A

**Non-patent literature cited in the description**

• **H. SCHULZRINNE et al.** RTP: A Transport Protocol for Real-Time Applications. internet society, 2003